# EUROPEAN PATENT APPLICATION

(11) **EP 4 814 290 A1**
(43) Date of publication of application: **30.09.2026**
(21) Application number: 25165818.3
(22) Date of filing: 25.03.2025
(51) Int. Cl.: F03D 1/06

(54) **WIND TURBINE ROTOR BLADE AND METHOD FOR MANUFACTURING A WIND TURBINE ROTOR BLADE**

(71) Applicant: Nordex Energy SE & Co. KG, 22419 Hamburg (DE)
(72) Inventor: Rieke, Johannes, 22419 Hamburg (DE); Block, Tim Berend, 22419 Hamburg (DE); Fabri, Patrick Roman, 22419 Hamburg (DE)
(74) Representative: Völkl Siebenson Patentanwälte - Partnerschaft mbB

(57) **Abstract**

A wind turbine rotor blade (110) comprises a spar cap (200) having a first-type stack (202) of prefabricated pultruded planks (210). The first-type stack has a length (L1) measured in a first direction (D1), a width (W1) defined as the distance between two opposite lateral sides (204) of the first-type stack and a height (H1) measured in a stacking direction of the pultruded planks. A further prefabricated pultruded plank is arranged transversely to the pultruded planks of the first-type stack on a lateral side of the first-type stack.

## Description

The present disclosure relates to a wind turbine rotor blade and a method for manufacturing a wind turbine rotor blade.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step, half shells are produced from many layers of a fiber composite material, into which support structures such as spar caps are integrated. A resin infusion process takes place and the half shells cure in their half-shell molds. In a second step, the manufactured half-shells are placed on top of each other and bonded together for producing a wind turbine rotor blade. Alternatively, the rotor blade can be manufactured in a so-called integral manufacturing process.

The spar caps are usually made of prefabricated pultruded planks. The pultruded planks can be stacked side-by-side and/or on top of each other to form the spar cap. Typically, the resulting spar cap has an essentially constant number of pultruded planks with respect to a width of the spar cap over its length, wherein the height of the spar car can vary. As a consequence, about two thirds of the interior of the rotor blade cannot be used efficiently because the available width of the wind turbine rotor blade in the outer third of the blade defines the maximum width of the whole spar cap. In other words, the outboard design space limits the spar cap width for the entire rotor blade.

For producing a plank stack of varying height, planks of varying length are stacked. The ends of the planks have to be chamfered to avoid debonding of planks due to stress concentrations respectively strain peaks. Furthermore, the production technology may limit the maximum number of planks stacked on top of each other. If more spar cap cross section is needed, a solution is to increase the overall spar cap width by arranging further plank stacks side by side.

A blunt runout of one or more plank stacks over the spar cap length is not desirable. Therefore, the further plank stacks having a shorter length must also be chamfered in thickness to avoid early failure at loading in bending around the longitudinal axis. An additional longitudinal chamfering of planks in its width could be done to overcome this problem. This solution, however, has a disadvantage in complexity and cost of creating the double chamfering (thickness and width).

It is an object of the present disclosure to provide a wind turbine rotor blade which overcomes the above limitations at least in part. Furthermore, it is an object of the present disclosure to provide a method for manufacturing such a wind turbine rotor blade.

These objects are achieved, inter alia, by the subject-matter of the independent claims. Advantageous embodiments and further developments are given in the dependent claims and are also apparent from the description and the figures.

According to a first aspect, a wind turbine rotor blade is disclosed. The wind turbine rotor blade comprises a spar cap having a first-type stack of prefabricated pultruded planks. The first-type stack has a length measured in a first direction, a width defined as the distance between two opposite lateral sides of the first-type stack and a height measured in a stacking direction of the pultruded planks. A further prefabricated pultruded plank is arranged transversely to the pultruded planks of the first-type stack on a lateral side of the first-type stack.

By arranging one or more further prefabricated pultruded planks transversely on a lateral side of a first-type stack, the width of the spar cap can be locally changed. In this way, the width of the spar cap can be adjusted to the varying width of the wind turbine rotor blade and is not constant over the entire length. Due to the low thickness of the pultruded planks, it is possible to increase the width of the spar cap even in outboard regions having a small chord length. The width of the spar cap can be increased in small steps compared with the arrangement of additional stacks of pultruded planks, which have a width according to the width of the planks. Accordingly, the available space in the aerodynamic shell of the wind turbine rotor blade can be used more efficiently. In other words, the usage of two different stacking directions or two different orientations for the pultruded planks turned out to enable an efficient usage of the available space in the interior of the wind turbine rotor blade.

Moreover, the further prefabricated pultruded plank can be made from the same pultruded profile as the prefabricated pultruded planks of the first-type stack. Hence, the same tools as used for preparing the planks of the first-type stack can be used for preparing the further pultruded plank(s), e.g. for cutting to length and chamfering. Accordingly, manufacturing time and costs for machines and tools can be significantly reduced.

Another advantage is that the disclosed arrangement of planks does not only enhance the flap stiffness of the wind turbine rotor blade but also the edge stiffness. This is because the disclosed placement has a flapwise and edgewise offset to the neutral axis of the wind turbine rotor blade. The higher the offset to the neutral axis the higher the efficiency of the added material (parallel axis theorem).

Last but not least, the solution can also be advantageous if the number of planks stacked on top of each other is below the manufacturing limit, since sidewise placements can, depending on the blade cross-section geometry, generate higher stiffness with the same amount of added spar cap material.

Prefabricated, pultruded planks (in the following also simply referred to as "planks") are elongated profiled components manufactured using the pultrusion process, a continuous method for producing high-strength fiber reinforced composites. They are typically made of glass or carbon fiber embedded in a resin matrix. They have a high fiber volume fraction and offer high strength, rigidity and low weight. The planks can be obtained by cutting off portions of desired length from a very long prefabricated pultruded semi-finished product which might be rolled up onto a coil. A chamfering (grinding) tool can then be used to chamfer, for example, edges at the longitudinal ends of the cut-off portions.

In the following a width direction of a plank is the direction in which the width of the plank is measured. The length direction is the direction in which the length of the plank is measured. The thickness direction is, accordingly, the direction in which the thickness is measured. The length of a plank is, for example, larger than its width and its width is larger than its thickness.

The planks of the first-type stack may all have the same width and/or thickness within the limits of manufacturing tolerance. The further pultruded plank may also have the same width and/or thickness as the planks of the first-type stack. For example, all planks of the first-type stack and the further plank have a constant width over their entire lengths. At least some or all planks of the first-type stack and/or the further plank may have a chamfered edge at one or both longitudinal ends. In other embodiments, the further pultruded plank may have a different width and/or thickness than each of the planks of the first-type stack.

The first-type stack comprises, for example, at least five or at least eight stacked planks. The length of the first-type stack measured in the first direction (also called longitudinal direction) is larger than its width and its height. The first direction is parallel or substantially parallel to the length directions of the first-type stack. For example, the length of the first-type stack is at least 100 times or at least 200 times larger than its width and/or its height. The width of the first-type stack may be larger than its height. Alternatively, and depending on the width of the pultruded planks, the width of the first-type stack may be smaller than its height. The width of the first-type stack is, for example, defined by or substantially equal to the width of its planks. The height of the first-type stack is equal or substantially equal to the sum of the thicknesses of its stacked planks. The stacking direction of the planks of the first-type stack is, accordingly, parallel to the thickness direction of its planks.

The height of the first-type stack may vary over its length. For example, starting from one longitudinal end of the first-type stack, the height first increases (e.g. monotonically), is then constant over a certain length and afterward decreases (e.g. monotonically) towards the opposite longitudinal end. This varying height may be obtained by having stacked planks of different lengths.

The further plank is arranged transversely to the planks of the first-type stack. This means, that the main extension plane of the further plank runs transversely, particularly perpendicularly, to the main extension planes of the planks of first-type stack. In other words: The width direction of the further plank runs transversely, particularly perpendicularly, to the width directions of the planks of the first-type stack. Thus, the width direction of the further plank is parallel or substantially parallel to the thickness direction of the planks of the first-type stack or to the stacking direction of the first-type stack. The length directions of the planks of the first-type stack are, for example, parallel or substantially parallel to the length direction of the further plank.

The further plank may be arranged directly on the lateral side, i.e. the further plank may be in direct contact with the first-type stack or the planks thereof.

According to an embodiment, the further pultruded plank has, in a cross-sectional view with a cross-sectional plane running perpendicularly to the first direction, a same cross-sectional shape as each of the planks forming the first-type stack. For the comparison between cross-sectional shapes of different planks, the cross-sectional shapes in center regions of the planks are used for the comparison.

The fact that the cross-sectional shapes of the further plank and the planks of the first-type stack are the same (within the limits of manufacturing tolerance) indicates that the planks are formed from the same pultruded semi-finished product. Particularly, the planks of the first-type stack and the further plank may come from the same coil on which the pultruded semi-finished product is rolled up and stored.

According to an embodiment, the further pultruded plank has a width being smaller than or equal to the smallest height of the first-type stack in the region in which the further pultruded plank is applied to the lateral side of the first-type stack. In other words, the further plank does not project beyond the first-type stack in the stacking direction of the first-type stack.

According to an embodiment, the further pultruded plank has a chamfer at a front face. The front face is a face at a longitudinal end of the plank facing in the length direction of the further plank. The chamfer is formed, for example, in an edge of the front face which edge extends in the width direction of the further plank. Particularly, the chamfered edge of the front face runs parallel to the stacking direction of the first-type stack.

By having a chamfered edge of the further plank which extends in the width direction of the further plank, the same chamfering tool as used for chamfering the planks of the first-type stack can be used to chamfer the edge of the further plank.

According to an embodiment, the further pultruded plank is arranged on the lateral side of the first-type stack only in a region of constant height of the first-type stack. In other words, the height of the first-type stack is constant over the area in which the further plank is applied.

According to an embodiment, the width of the further plank is equal to or less than the height of the first-type stack in the region having the constant height. For example, the further plank and the first-type stack terminate flush with each other in the stacking direction of the first-type stack. Alternatively, the width of the further pultruded plank can be less than the constant height forming a step between the first-type stack and the further pultruded plank.

For example, the further pultruded plank has a cross-sectional profile which is different from the cross-sectional profile of each of the pultruded planks of the first-type stack. In particular, the width of the further pultruded plank is less than the smallest width of a plank of the first-type stack. In other words, different planks are used for the first-type stack and the further pultruded plank. This allows a very fine tuning of the width and height of the spar cap along the spanwise direction of the rotor blade. Since for the further pultruded plank a second type of plank is needed it can be optimally adapted to the spatial and structural conditions of the rotor blade. For example, if a very thin spar cap is needed, i.e. a height of the first-type stack is comparatively low and comprises, for example, only 8 or less planks, the width of the further pultruded plank is correspondingly low compared to the width of a plank of the first-type stack. Alternatively, the width of the planks in the first-type stack may correspond to the width of the spar cap. Then the further plank might only have a width of 10 to 30 percent of the width of the first-type stack.

According to an embodiment, the further pultruded plank is arranged on the lateral side of the first-type stack in a region of varying height of the first-type stack. In other words, the height of the first-type stack changes in the first direction over the longitudinal area in which the further plank is applied.

According to an embodiment, a plurality of further prefabricated pultruded planks is arranged transversely to the prefabricated pultruded planks of the first-type stack on the lateral side of the first-type stack. The plurality of further pultruded planks forms a second-type stack. The stacking direction of the second-type stack is transverse, in particular perpendicular, to the stacking direction of the first-type stack.

All features disclosed herein for the further pultruded plank are also disclosed for all other further pultruded planks. The (further) planks of the second-type stack may all have the same width and/or thickness within the limits of manufacturing tolerance.

The second-type stack comprises at least two further planks stacked above each other. The length of the second-type stack measured in the first direction is larger than its width and its height. The first direction is parallel or substantially parallel to the length directions of the second-type stack. For example, the length of the second-type stack is at least 10 times or at least 20 times larger than its width and/or its height. The width of the second-type stack may be smaller than, equal to or larger than its height. The cross-sectional shape of the second-type stack depends on the inner cross-sectional shape of the aerodynamic profile of the rotor blade and the loads to be transferred. The width of the second-type stack is defined by or substantially equal to the width of its planks. The height of the second-type stack is equal or substantially equal to the sum of the thicknesses of its stacked planks. The stacking direction of the planks of the second-type stack is parallel to the thickness direction of its planks.

According to an embodiment, the second-type stack has a varying height (over its length). The height of the second-type stack is measured in the stacking direction of the further planks. The varying height of the second-type stack is realized, for example, by stacking planks with different lengths. For example, starting from one longitudinal end of the second-type stack, the height first increases (e.g. monotonically), is then constant over a certain length and afterward decreases (e.g. monotonically) towards the opposite longitudinal end. Due to the varying height of the second-type stack, the width of the spar cap varies over its length.

According to an embodiment, the second-type stack has the form of a rectangle or parallelogram or a trapezoid in a cross-sectional view with a cross-sectional plane running perpendicularly to the first direction. Using such shapes can be advantageous because it enables to minimize the appearance of gaps, which are purely filled with resin during the vacuum infusion process. For example, the pultruded planks of the second-type stack may have different widths amongst them. The widths can be different from the widths of the planks of the first-type stack.

According to an embodiment, the spar cap comprises a plurality of first-type stacks arranged adjacent to each other in a second direction. The second direction is transverse or perpendicular to the first direction. The second direction is also transverse or perpendicular to the stacking direction of the first-type stack and/or is parallel to the stacking direction of the second-type stack.

According to an embodiment, the further pultruded plank is arranged on an outer lateral side of a first outer first-type stack. An outer lateral side is a lateral side facing away from all the first-type stacks arranged adjacent to each other. That means, an outer lateral side of a first-type stack does not face another first-type stack. Thus, no further plank, which is arranged transversely to the planks of the first-type stacks, is arranged between two adjacent first-type stacks.

According to an embodiment, another further pultruded plank is arranged on an outer lateral side of a second outer first-type stack. The other further pultruded plank is arranged transversely to the planks of the first-type stack on which it is arranged. For example, the plurality of first-type stacks arranged adjacent to each other is arranged, in the second direction, between the further plank and the other further plank.

A second-type stack as specified above may be arranged on the outer lateral side of the first outer first-type stack and/or on the outer lateral side of the second outer first-type stack.

According to an embodiment, the number of first-type stacks arranged adjacent to each other in the second direction is defined by the width of the wind turbine rotor blade in a tip region of the wind turbine rotor blade. For example, the number of first-type stacks is chosen such that no further first-type stack would fit into the tip region of the wind turbine rotor blade adjacent to the plurality of first-type stacks.

According to an embodiment, the further pultruded plank is pre-bent along the first direction according to a prebend of the wind turbine rotor blade. Wind turbine rotor blades often have a prebend such that they are bent away from the tower to maintain a tip to tower clearance during operation. This prebend creates a curvature in the spar cap longitudinal direction. The further plank is bent along its stiffer axis in order to follow the blade longitudinal curvature in flap direction.

According to an embodiment, the further pultruded plank or the second-type stack has a length measured in the first direction which is at least 20% or at least 30% and/or at most 60% or at most 50% of the length of the first-type stack. Particularly, the further plank or the second-type stack is only arranged in the central region of the first-type stack. The region of the first-type stack in the tip region of the wind turbine rotor blade may be free of the further plank.

According to an embodiment, the further pultruded plank or the second-type stack is arranged, particularly only arranged, in a region of the wind turbine rotor blade which extends between 20% and 80% or between 30% and 70% of the length of the wind turbine rotor blade measured from the root end in the first direction. In other words, the further pultruded plank or the second-type stack is retracted from the root end by at least 20% or at least 30% of the length of the wind turbine rotor blade and ends at a distance from the root end which is at most 80% or at most 70% of the length of the wind turbine rotor blade. Accordingly, the further plank or the second-type stack is (only) arranged in the center region of the wind turbine rotor blade.

According to an embodiment, the further pultruded plank or the second-type stack is arranged in the region of the wind turbine rotor blade which has a chordwise extension of at least 50% of the root diameter. In other words, the further plank or the second-type stack is only arranged in a broad region of the wind turbine rotor blade. The chordwise direction is, for example, parallel to the above defined second direction.

According to a second aspect, a method for manufacturing a wind turbine rotor blade is disclosed. The method comprises a step of stacking a plurality of prefabricated pultruded planks in a mold in order to form a first-type stack, wherein the stacking direction is perpendicular to an inner surface of the mold. In a further step, a further prefabricated pultruded plank is arranged transversely to the planks of the first-type stack on a lateral side of the first-type stack.

The method disclosed herein is suited, in particular, for producing a wind turbine rotor blade according to any of the embodiments described herein. Therefore, all features disclosed for the method are also disclosed for the wind turbine rotor blade and vice versa.

For example, a plurality of further pultruded planks is stacked on the lateral side of the first-type stack so that the further pultruded planks form a second-type stack. The second direction is then parallel to the inner surface of the mold and/or transverse to the stacking direction of the first-type stack.

The mold is, in particular, a mold for a half shell or a mold for a spar cap of a wind turbine rotor blade. Accordingly, the inner surface (lay-up surface) may be curved according to the curvature of the pressure side or the suction side of the wind turbine rotor blade.

Hereinafter, the wind turbine rotor blade and the method for manufacturing a wind turbine rotor blade will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

In the figures:
Fig. 1 shows a wind turbine.
Fig. 2 shows a wind turbine rotor blade.
Fig. 3 shows a cross-sectional view of a wind turbine rotor blade.
Fig. 4 shows a spar cap in a top view.
Fig. 5 shows a spar cap in a side view.
Fig. 6 shows another spar cap in a side view.
Fig. 7 shows yet another spar cap in a side view.
Fig. 8 shows a spar cap in a cross-sectional view.
Fig. 9 shows another spar cap a cross-sectional view.
Fig. 10 and 11 show different positions in a method for manufacturing a wind turbine rotor blade.

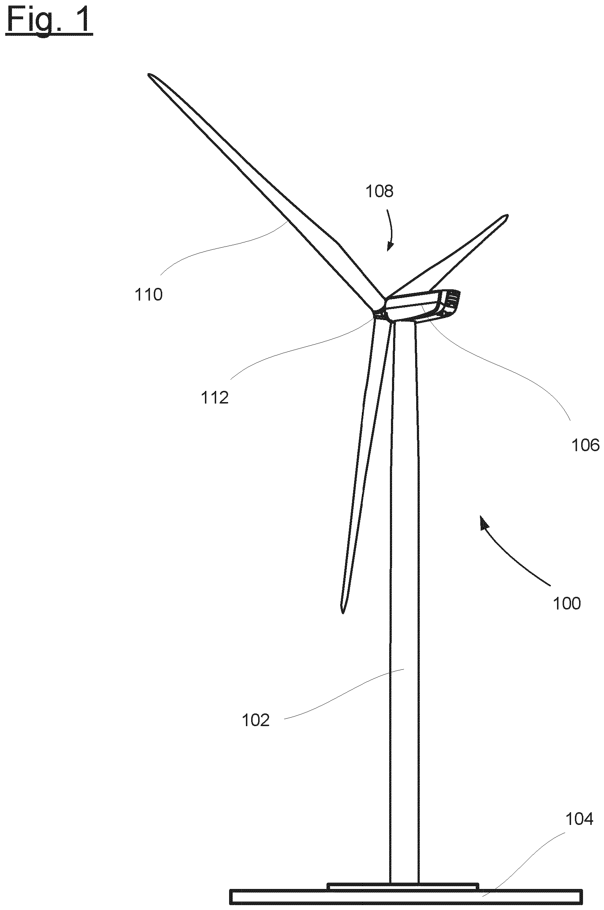

Fig. 1 shows a schematic view of a wind turbine 100 which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

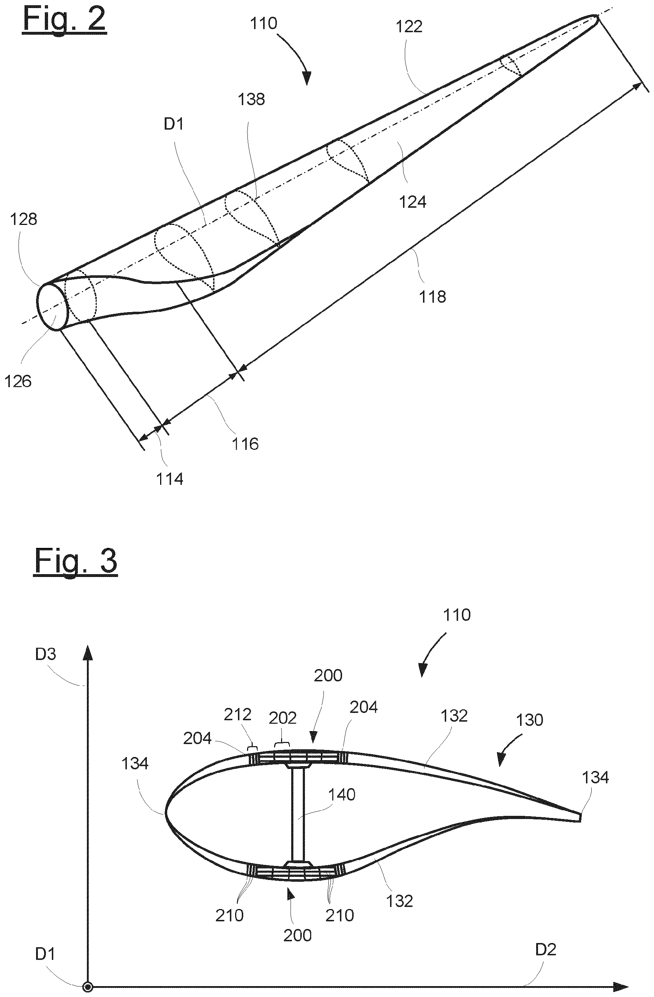

Fig. 2 shows an exemplary embodiment of a wind turbine rotor blade 110. The wind turbine rotor blade 110 has the shape of a conventional rotor blade and has a rotor blade root portion 114 facing the rotor hub 112. The rotor blade root portion 114 typically has an essentially circular cross-section. The rotor blade root portion 114 is followed by a transition portion 116 and profile portion 118. The wind turbine rotor blade 110 has a pressure side 122 and an opposite suction side 124 with respect to a first direction D1 (also named main extension direction or spanwise direction or longitudinal direction). The wind turbine rotor blade 110 is essentially hollow inside.

In the rotor blade root portion 114 a rotor blade root end 126 with a flange connection 128 is provided, by means of which the wind turbine rotor blade 110 can be mechanically connected to a pitch bearing or an extender. The wind turbine rotor blade 110 can be a segmented rotor blade.

Fig. 3 shows a schematic cross section profile 138 (see Fig. 2) of an exemplary embodiment of the wind turbine rotor blade 110. The cross-sectional plane runs transversely, in particular orthonormal, to the first direction D1. The wind turbine rotor blade 110 comprises a shell 130, which comprises two half shells 132, wherein one half shell 132 corresponds to the pressure side 122 and the other one to the suction side 124. The two half shells 132 are firmly connected to each other along the first direction D1 at opposite connection regions 134 at the leading edge and at the trailing edge. Each half shell 132 has a spar cap 200 embedded in the shell-structure, which is not shown for the sake of clarity. A spar cap 200 can also be generally named "main laminate" and carries main loads during operation of the wind turbine rotor blade 110. The wind turbine rotor blade 110 further comprises a shear web 140 connecting the spar caps 200. Next to a spar cap 200, a half shell 132 comprises one or more core elements, e.g. made from polyurethane foam (not shown).

The spar caps 200 each comprise a plurality of first-type stacks 202 which are arranged adjacent to each other in a second direction D2. The second direction D2 is the chordwise direction of the wind turbine rotor blade 110. The plane D2/D3 is orthonormal to D1. D2 points from the leading edge to the trailing edge and D3 is created by the cross-product of D1 x D2. Each of the first-type stacks 202 comprises a plurality, e.g. at least five, prefabricated pultruded planks 210 which are stacked above each other. The stacking direction of the first-type stacks 202 is substantially perpendicular to the second direction D2 and to the first direction D1.

Further prefabricated pultruded planks 210 are stacked on the outer lateral sides 204 of outer ones of the first-type stacks 210. The stacked further planks 210 in each case form a second-type stack 212. The second-type stacks 212 have a stacking direction which is transverse or perpendicular to the stacking direction of the first-type stacks 202.

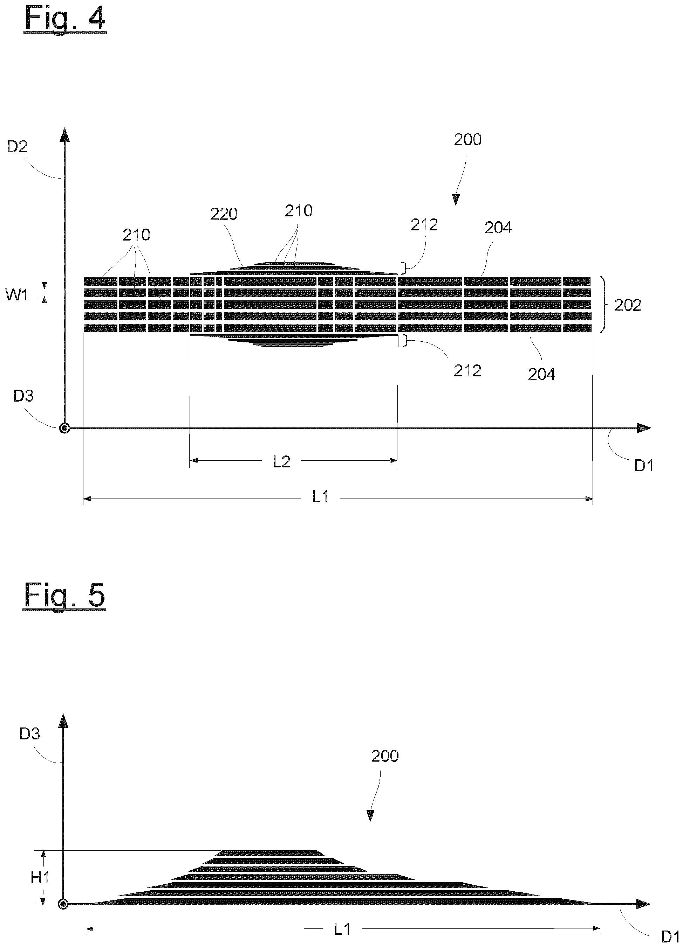

Fig. 4 shows an exemplary embodiment of the spar cap 200 in a top view, i.e. with the viewing direction parallel to the third direction D3 indicated in figure 3. Fig. 5 shows the spar 200 in a schematic side view with the viewing direction parallel to the second direction D2.

As can be seen in Fig. 4 and 5, the lengths of the planks 210 vary. The maximum lengths of the planks 210 of the first-type stacks 202 define the length L1 of the first-type stacks 202 and of the whole spar cap 200. The maximum length of the further planks 210 of the second-type stacks 212 define the lengths L2 of the second-type stacks 212. The lengths L2 of the second-type stacks 212 is smaller than the lengths L1 of the first-type stacks L1.

The first-type stacks 202 each have a width W1 which is defined by the widths of the planks 210. The further planks 210 of the second-type stacks 212 have the same width and thickness as the planks 210 of the first-type stacks 202.

As can be seen in Fig. 4, the further planks 210 of the second-type stacks 212 comprise chamfered front faces 220. Likewise, the planks 210 of the first-type stacks 202 may comprise chamfered front faces. Moreover, the lengths of the further planks 210 of the second-type stacks 212 vary so that the heights H2 of the second-type stacks 212 changes along their lengths L2. Accordingly, the overall width of the spar cap 200, measured in the second direction D2, changes along first direction D1.

Fig. 5 indicates that also the lengths of the planks 210 of the first-type stacks 202 vary so that the heights H1 of the first-type stacks 202 vary over the first direction D1. Accordingly, the height of the whole spar cap 200 varies along the first direction D1.

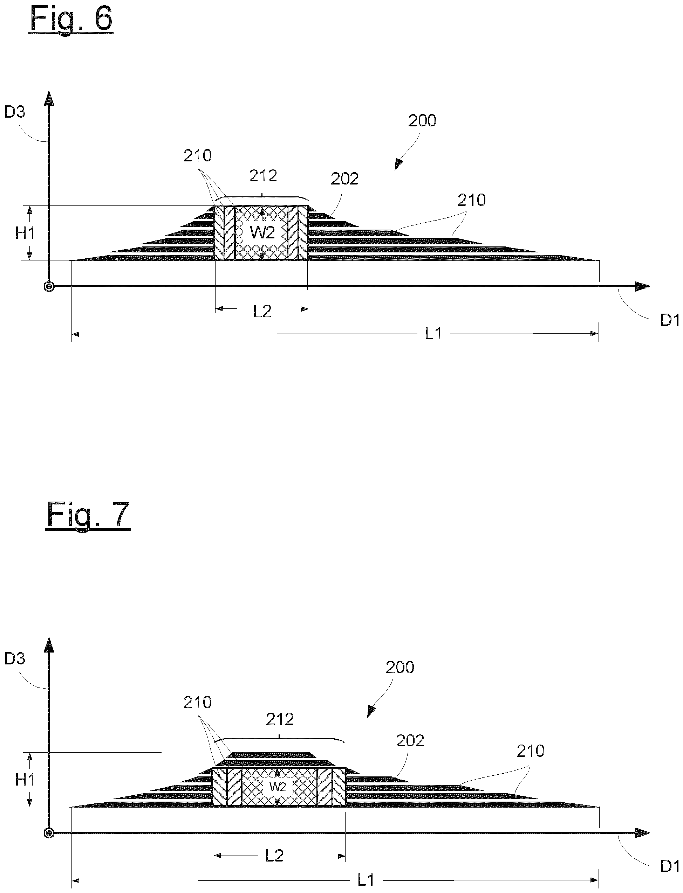

In the exemplary embodiment of a spar cap 200 of Fig. 6, it can be seen that also the planks 210 of the first-type stacks 202 have chamfered front faces. The second-type stacks 212 are only applied in a region of the first-type stacks 202 of constant height H1. The further planks 210 of the second-type stacks 212 all have the same width W2 which is equal to the constant height H1.

In the exemplary embodiment of the spar cap 200 of Fig. 7, the second-type stacks 212 are applied in a region of the first-type stacks 202 of varying height H1. The width W2 of the further planks 210 of the second-type stack 212 is equal to the smallest height H1 of the first-type stack 202 in this region. Thus, the further planks 210 do not project beyond the first-type stacks 202 in the stacking direction thereof.

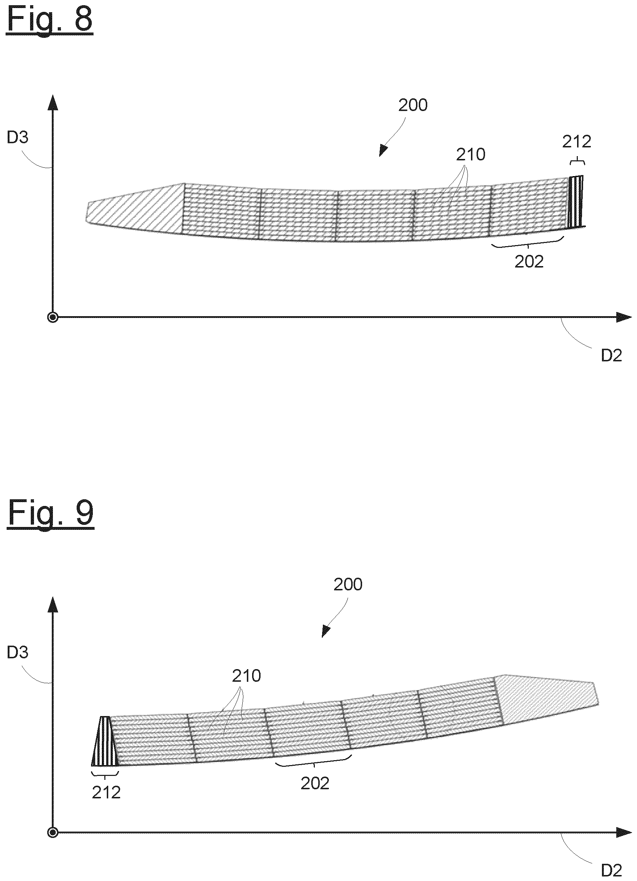

Fig. 8 and 9 show two further exemplary embodiments of spar caps 200 in a cross-sectional view, again with a cross-sectional plane running perpendicularly to the first direction D1. As can be seen here, the second-type stacks 212 can be parallelogram-shaped (Fig. 8) or trapezoidal-shaped (Fig. 9) depending on the needs.

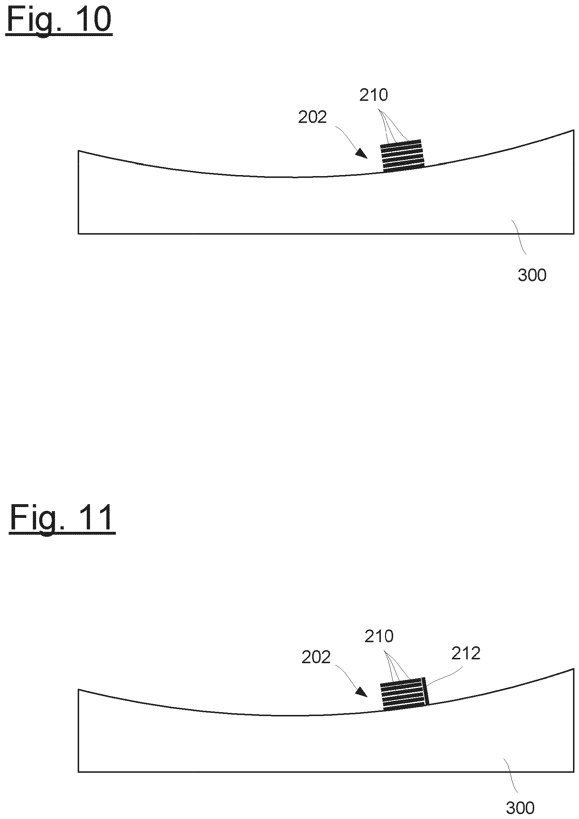

Fig. 10 shows a first position in an exemplary embodiment of the method for manufacturing a wind turbine rotor blade. A mold 300 is provided which has an upper surface onto which a first-type stack 202 of prefabricated pultruded planks 210 is stacked. The stacking direction is perpendicular to the upper surface of the mold 300. The upper surface has, for example, the shape of the suction side of the wind turbine rotor blade.

In the position of Fig. 11, a further prefabricated pultruded plank 210 is applied or stacked onto a lateral side of the first-type stack 202. Afterwards, another further plank 210 may be stacked thereon. The stacking direction of the further planks 210 is parallel to the upper surface of the mold 300.

### List of reference signs

- 100: wind turbine
- 102: tower
- 104: foundation
- 106: nacelle
- 108: rotor
- 110: wind turbine rotor blade
- 112: rotor hub
- 114: rotor blade root portion
- 116: transition portion
- 118: profile portion
- 122: pressure side
- 124: suction side
- 126: rotor blade root end
- 128: flange connection
- 130: shell
- 132: half shell
- 134: connection region
- 138: cross section
- 140: shear web
- 200: spar cap
- 202: first-type stack
- 204: lateral side
- 210: prefabricated pultruded plank
- 212: second-type stack
- 220: front face
- 300: mold

- D1: first direction
- D2: second direction
- D3: third direction
- L1: length
- W1: width
- H1: height
- L2: length
- W2: width
- H2: height

## Claims

1. Wind turbine rotor blade (110) having a spar cap (200), the spar cap (200) comprising
- a first-type stack (202) of prefabricated pultruded planks (210), the first-type stack (202) having a length (L1) measured in a first direction (D1), a width (W1) defined as the distance between two opposite lateral sides (204) of the first-type stack (202), and a height (H1) measured in a stacking direction of the pultruded planks (210), wherein
- a further prefabricated pultruded plank (210) is arranged transversely to the pultruded planks (210) of the first-type stack (202) on a lateral side (204) of the first-type stack (202).

2. Wind turbine rotor blade (110) according to claim 1, wherein
- in a cross-sectional view with a cross-sectional plane running perpendicularly to the first direction (D1), the further pultruded plank (210) has a same cross-sectional shape as each of the planks (210) forming the first-type stack (202).

3. Wind turbine rotor blade (110) according to any one of the preceding claims, wherein
- the further pultruded plank (210) has a width (W2) being smaller than or equal to the smallest height (H1) of the first-type stack (202) in the region in which the further pultruded plank (210) is applied to the lateral side (204) of the first-type stack (202).

4. Wind turbine rotor blade (110) according to any one of the preceding claims, wherein
- the further pultruded plank (210) has a chamfer at a front face (220).

5. Wind turbine rotor blade (110) according to any one of the claims 1 to 4, wherein
- the further pultruded plank (210) is arranged on the lateral side (204) of the first-type stack (202) only in a region of constant height (H1) of the first-type stack (202).

6. Wind turbine rotor blade (110) according to any one of the claims 1 to 4, wherein
- the further pultruded plank (210) is arranged on the lateral side (204) of the first-type stack (202) in a region of varying height (H1) of the first-type stack (202).

7. Wind turbine rotor blade (110) according to any one of the preceding claims, wherein
- a plurality of further prefabricated pultruded planks (210) is arranged transversely to the prefabricated pultruded planks (210) of the first-type stack (202) on the lateral side (204) of the first-type stack (202) forming a second-type stack (212).

8. Wind turbine rotor blade (104) according to claim 7, wherein
- the second-type stack (212) has a varying height (H2), wherein the height (H2) is measured in the stacking direction of the further pultruded planks (210).

9. Wind turbine rotor blade (110) according to claim 7 or 8, wherein
- in a cross-sectional view with a cross-sectional plane running perpendicularly to the first direction (D1), the second-type stack (212) has the form of a rectangle or a parallelogram or a trapezoid.

10. Wind turbine rotor blade (110) according to any one of the preceding claims, wherein
- the spar cap (200) comprises a plurality of first-type stacks (202) arranged adjacent to each other in a second direction (D2),
- the further pultruded plank (210) is arranged on an outer lateral side (204) of a first outer first-type stack (202), and
- another further pultruded plank (210) is arranged transversely on an outer lateral side (204) of a second outer first-type stack (202).

11. Wind turbine rotor blade (110) according to any one of the preceding claims, wherein
- the further pultruded plank (210) is pre-bent along the first direction (D1) according to a prebend of the wind turbine rotor blade (110).

12. Wind turbine rotor blade (110) according to any one of the preceding claims, wherein
- the further pultruded plank (210) has a length (L2) measured in the first direction (D1) which is at least 20% and at most 60% of the length (L1) of the first-type stack (202).

13. Wind turbine rotor blade (110) according to any one of the preceding claims, wherein
- the further pultruded plank (210) is arranged in a region of the wind turbine rotor blade (110) which extends between 20% and 80% of the length of the wind turbine rotor blade (110) measured from the root end in the first direction (D1).

14. Wind turbine rotor blade (110) according to any one of the preceding claims, wherein
- the further pultruded plank (210) is arranged in a region of the wind turbine rotor blade (110) which has a chordwise extension of at least 50% of the root diameter.

15. Method for manufacturing a wind turbine rotor blade (110) comprising the steps of:
- stacking a plurality of prefabricated pultruded planks (210) in a mold (300) in order to form a first-type stack (202), wherein the stacking direction is perpendicular to an inner surface of the mold (300),
- arranging a further prefabricated pultruded plank (210) on a lateral side (204) of the first-type stack (202), wherein the further pultruded plank (210) is arranged transversely to the pultruded planks (210) of the first-type stack.
